# EUROPEAN PATENT APPLICATION

(11) **EP 3 506 588 A1**
(43) Date of publication of application: **03.07.2019**
(21) Application number: 17306938.6
(22) Date of filing: 27.12.2017
(51) Int. Cl.: H04L 29/06, H04W 12/08, H04W 12/06

(54) **METHOD OF AUTHENTICATING ACCESS TO A WIRELESS COMMUNICATION NETWORK AND CORRESPONDING APPARATUS**

(71) Applicant: InterDigital CE Patent Holdings, 75017 Paris (FR)
(72) Inventor: LEGUILLON, Valérie, 35576 Cesson-Sévigné Cedex (FR); ONNO, Stéphane, 35576 Cesson-Sévigné Cedex (FR); NEUMANN, Christoph, 35576 Cesson-Sévigné Cedex (FR)
(74) Representative: Huchet, Anne

(57) **Abstract**

Secure and simple authentication method and device are provided for accessing a wireless communication network. An access point providing a wireless communication network receives from a device wishing to access the access point's wireless communication network an authentication request that includes a Media Access Control address of the device. The access point receives an incoming call or short message service from a caller, destined to an Internet Protocol telephone attached to the access point. The access point verifies if the MAC address included in the authentication request and the telephone number of the caller correspond to a known MAC address and telephone number. If such correspondence is found, the access point sends an authentication reply indicating successful authentication to the device.

## Description

### FIELD

The present disclosure generally relates to the field of accessing wireless communication networks, and in particularly to secure and user-friendly authentication for accessing a network.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

A home or office environment includes a Wireless Local Area Network (WLAN) controlled by one or more an Access Points (APs), routers or GateWays (GWs) based on Internet Protocol (IP) technology. As intrusion into the WLAN by malicious users is facilitated by the wireless character of the WLAN, home or office wireless networks protect access to the WLAN. Present WLANs are mainly according to the Wi-Fi standard (IEEE 802.11). Wi-Fi Protected Setup (WPS) is a network access authentication method that is part of an optional certification program and is not required for a product to be Wi-Fi certified. It was developed by the Wi-Fi Alliance to standardize an easy and secure setup solution for Wi-Fi networks because many vendors were using proprietary solutions for WLAN setup and the proliferation of proprietary solutions was causing confusion and cross-vendor incompatibility that adversely affected overall WLAN security and seriously complicated access to the WLAN for users. WPS proposes three access modes, which are PIN entry (for Personal Identification Number, also known as WPS key or WPS PIN), Push-Button Configuration (known as PBC), and Near Field Communication (known as NFC). For the PIN entry mode, when an unknown device wishes to connect to the WLAN, the user must enter a numerical code that is generally printed on a sticker on the access point. In the PBC mode, the user must physically press a button on the access point. The user then has a two-minute window for connection of a new device to the WLAN, without requiring the entry of a PIN code. These methods have been shown to contain important security flaws. The PIN method can be hacked by a brute-force attack. The PBC method enables unintended devices within range of the network to join the network during the two-minute window. For PBC the WPS requires that within the two-minute window only a single device is allowed to join the network, and the access point should wait until the end of the window before granting access. If more than one device tries to connect within that period, access should be denied for all. However, implementing the complete features is not a requirement for WPS certification. In practice, many access points do not implement the two minutes waiting feature, but grant access to the first device that connects within the two-minute window. While this improves user experience, it weakens security as it makes brute force attacks easier. There is thus a need for a user-friendly authentication method that is easy for the non-technical user while offering improved security.

### SUMMARY

According to one aspect of the present disclosure, there is provided a method of authenticating access to a wireless communication network of an access point. The method includes receiving by the access point an authentication request for authenticating a device to access the wireless communication network. The authentication request includes a Media Access Control address of the device. The method further includes receiving by the access point, at least one of an incoming call or short message service from a caller, destined to an Internet Protocol telephone connected to the access point. The method further includes sending by the access point and to the device an authentication response indicating authentication success when there exists a Media Access Control address - associated telephone number correspondence for the Media Access Control address of the device and a telephone number of the caller, and sending by the access point and to the device an authentication response indicating an authentication failure when such correspondence does not exist.

According to a further aspect of the method of authenticating access to a wireless communication network of an access point, the method further includes starting a time window with a predefined duration upon a trigger event, and sending an authentication failure to the device when the incoming call or short message service is not received within the predefined duration of the time window.

According to a further aspect of the method of authenticating access to a wireless communication network of an access point, the trigger event is an entry of the access point into Wi-Fi Protected Setup - Push Button Configuration mode.

According to a further aspect of the method of authenticating access to a wireless communication network of an access point, the trigger event is receipt by the access point of a probe request message comprising a Media Access Control address of the device.

According to a further aspect of the method of authenticating access to a wireless communication network of an access point, the method further includes retrieving, from a storage location accessible by the access point, Media Access Control addresses and associated telephone numbers.

According to a further aspect of the method of authenticating access to a wireless communication network of an access point, the storage location is in the access point.

According to a further aspect of the method of authenticating access to a wireless communication network of an access point, the storage location is at an Internet Service Provider.

The present principles also relate to an access point. The access point includes a wireless network interface configured to provide a wireless local area network. The wireless network interface is further configured to receive an authentication request for authenticating a device to access the wireless local area network, the authentication request including a Media Access Control address of the device. The access point further includes a telephone interface configured to receive at least one of an incoming call or short message service from a caller destined to an Internet Protocol telephone connected to the telephone interface. The wireless network interface is further configured to send to the device an authentication response indicating authentication success when there exists a Media Access Control address - associated telephone number correspondence for the Media Access Control address of the device and a telephone number of the caller, and is further configured to send to the device an authentication response indicating an authentication failure when the correspondence does not exist.

According to a further aspect of the access point, the access point further includes a processor configured to start a time window with a predefined duration upon a trigger event, and the wireless network interface being further configured to send an authentication failure to the device when the incoming call or short message service is not received within the predefined duration of the time window.

According to a further aspect of the access point, the access point further includes a memory configured for retrieving Media Access Control addresses and associated telephone numbers.

According to a further aspect of the access point, the access point is a wireless router.

According to a further aspect of the access point, the access point device is a gateway.

According to a further aspect of the access point, the access point device is a Set Top Box.

According to a further aspect of the access point, the access point device is a mobile communication device.

According to a further aspect of the access point, the mobile communication device is a smart phone.

### BRIEF DESCRIPTION OF THE DRAWINGS

More advantages of the present disclosure will appear through the description of particular, non-restricting embodiments. To describe the way the advantages of the present disclosure can be obtained, particular descriptions of the present principles are rendered by reference to specific embodiments thereof which are illustrated in the appended drawings. The drawings depict exemplary embodiments of the disclosure and are therefore not to be considered as limiting its scope. The embodiments described can be combined to form particular advantageous embodiments. In the following figures, items with same reference numbers as items already described in a previous figure will not be described again to avoid unnecessary obscuring the disclosure. The embodiments will be described with reference to the following drawings in which:
**Figure 1** is a typical prior art system enabling wireless devices in a local area network to access WLAN and WAN networks via an access point.
**Figure 2** is a sequence diagram of prior art WPS communication set up between a guest device and an access point according to the WPS PBC protocol.
**Figure 3** is a sequence diagram of an exemplary first embodiment of a method of accessing a wireless communication network according to the present principles.
**Figure 4** is a further sequence diagram of the first embodiment of a method according to the present principles.
**Figure 5** is a sequence diagram of the first embodiment of the method according to the present principles when no call/SMS was received.
**Figure 6** is a flow chart related to the first embodiment of the method of accessing a wireless communication network per the principles of the present disclosure.
**Figure 7** is a sequence diagram of a second embodiment of the method, without triggering via PBC.
**Figure 8** is a flow chart of the second embodiment of the method.
**Figure 9** is an embodiment of an access point suitable for implementing the method per the principles of the present disclosure.
**Figure 10** is a generic flow chart of a method of authenticating access to a wireless communication network according to the present principles.

It should be understood that the drawings are for purposes of illustrating the concepts of the disclosure and are not necessarily the only possible configuration for illustrating the disclosure.

### DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

In the following, the terms 'gateway' (GW), 'access point' (AP) and wireless access point' (WAP) are used indifferently for meaning the same. This means that a gateway as mentioned in the following is also a (wireless) access point. In computer networking, a wireless access point is a networking hardware device that allows a wireless network compliant device to connect to a network. Therefore, the present principles may apply to other types of access points than gateways, such as Set Top Boxes, or mobile devices (tablets, smart phones, ...) acting as a wireless access point, e.g., offering a Wi-Fi or WiMAX wireless access point to WLAN devices and a 4G/5G/LTE wireless connection to a WLAN for the WLAN devices connected to it.

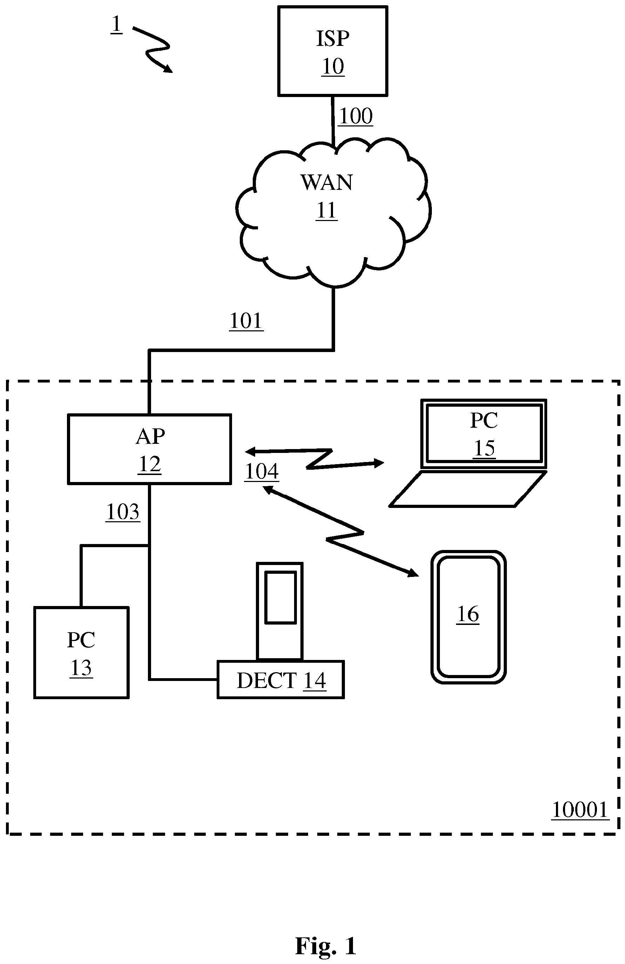

**Figure 1** is a typical prior art system enabling wireless devices in a local area network to access WLAN and WAN networks via an access point. The system **1** includes an Internet Service Provider ISP **10,** connected to a Wide Area Network WAN **11** via link **100,** and a subscriber premises **10001,** connected to WAN **11** via link 101. Subscriber premises **10001** includes an access point AP **12.** Access point **12** provides a LAN (wired LAN **103,** wireless LAN **104)** and wired and wireless access to the LAN for a Desk Top PC **13** via wired link **103,** a Digital Enhanced Cordless Telecommunications (DECT) telephone set **14,** a portable PC **15** and a smartphone **16** via wireless link **104.** Access Point **12** is for example a home gateway which is provided to the subscriber in the context of a triple-play offer from service provider **10** for combined Internet, IP telephony and IPTV services.

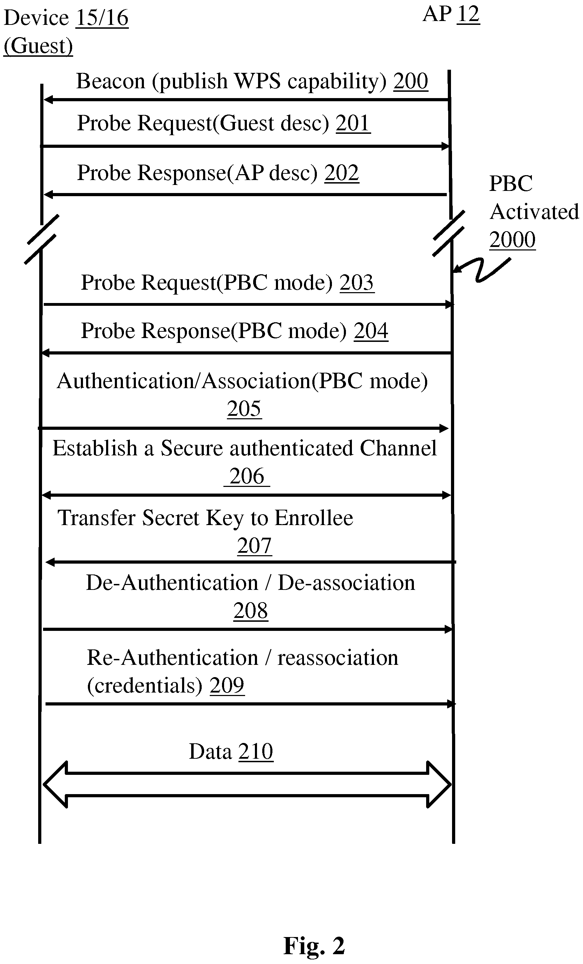

**Figure 2** is a sequence diagram of prior art WPS communication set up between a guest device (e.g., PC **15** or smartphone **16)** and an access point (e.g., gateway **12)** according to the WPS PBC protocol. In terms of WPS, Guest **15/16** is referred to as Enrollee. Guest **15/16** starts out as not having discovered the Wi-Fi network offered by AP **12.** Guest **15/16** is for example not within range of the network offered by AP **12** or Guest **15/16** is not powered on. Guest **15/16** is therefore said to be not authenticated and not associated. When Guest **15/16** is powered on / comes within range of the network offered by AP **12,** Guest **15/16** will receive so-called 802.11 beacons **200** from AP **12** indicating support for WPS. Guest **15/16** sends a WPS probe request **201** including Enrollee Discovery data. These probe requests advertise the Guest's supported data rates and Wi-Fi capabilities. The probe request comprises the BSSID (Basic Service Set ID, i.e. the Media Access Control (MAC) address or hardware address of the Wi-Fi chipset running on the Guest. AP **12,** receiving the probe request, will send a probe response message **202** advertising the Service Set IDentifier (SSID, = wireless network name, e.g. 'MyWirelessNetwork') of the AP's wireless network, its supported data rates, its supported encryption types, and its wireless capabilities. Guest **15/16** chooses (automatically according to a preference, or following on a manual user choice) the AP's wireless network from the probe responses it receives, and the association process can start upon the user pressing a button on AP **12** (reference **2000).** This starts a time window ('PBC Monitor Time') with a predefined time (e.g., 120s) in which AP **12** is ready to receive an enrollee PBC probe request and register the enrollee. With messages **203** and **204,** guest **15/16** and AP **12** indicating that they are in PBC mode. If AP **12** receives such a request within the time window, messages are exchanged for authentication/association **(205),** for establishing a secure channel **(206),** for transfer of a secret key to guest **15/16 (207)** and for de-authentication **(208).** This is followed by a reconnection and re-association of the guest **15/16** with AP **12** using obtained credentials **(209).** Finally, this is followed by a data exchange **210,** for example, by a download by guest **15/16** of a web-page from the Internet via AP **12.**

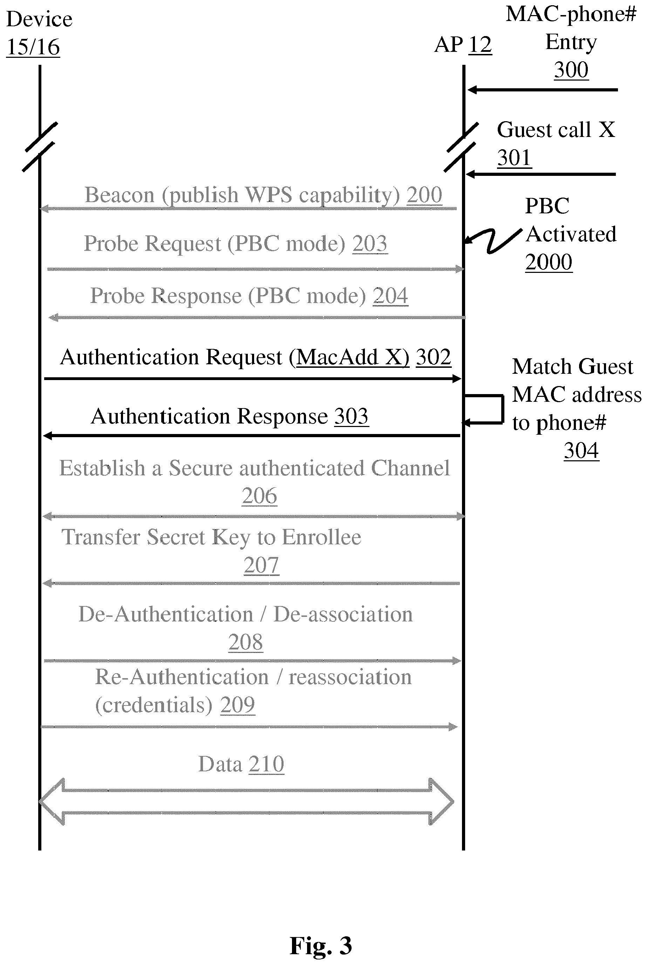

**Figure 3** is a sequence diagram of an exemplary first embodiment of a method of accessing a wireless communication network according to the present principles. Exchanges between devices **15/16** and **12** which have already been discussed with reference to figure 2 are indicated with a grey shade and will not be discussed here again for clarity and conciseness. In a preparatory phase, Guest device's **15/16** MAC address and an associated telephone number of the owner/user of Guest device **15/16** are made accessible to AP **12** for verification (reference **300).** This provision of information may be done in many different ways. For example, if Guest device **15/16** is a device sold by or having a subscription with the same ISP as the ISP of AP **12,** the ISP may have the owner/user's (and thus the guest's) telephone number in the ISP's database. AP **12** can then access this information via a secured access to the ISP via the Internet. Alternatively, the Guest device's **15/16** MAC address and associated guest telephone number may be entered into a local database in AP **12** by a local network administrator. At **301,** a call or Short Message Service (SMS) is received by AP **12** from a person wishing to connect Guest device **15/16** to the network. At **2000,** a user of the local network **104** presses a PBC push button on AP **12.** This puts AP **12** in PBC mode and triggers the start of the 120s PBC Monitor Time. At **302,** Guest **15/16** sends an authentication request to AP **12.** The authentication request includes the MAC address of the Guest device **15/16.** In **304,** AP **12** verifies if the MAC address included in the authentication request **302** and the telephone number of the caller of the call received in **301** correspond to a known MAC address and associated (corresponding) telephone number. If so, it transmits an authentication response **303** indicating successful authentication to the Guest device **15/16** and the WPS proceeds with the next steps **206** to **209** and data exchange **210** between Guest device **15/16** and AP **12** is enabled.

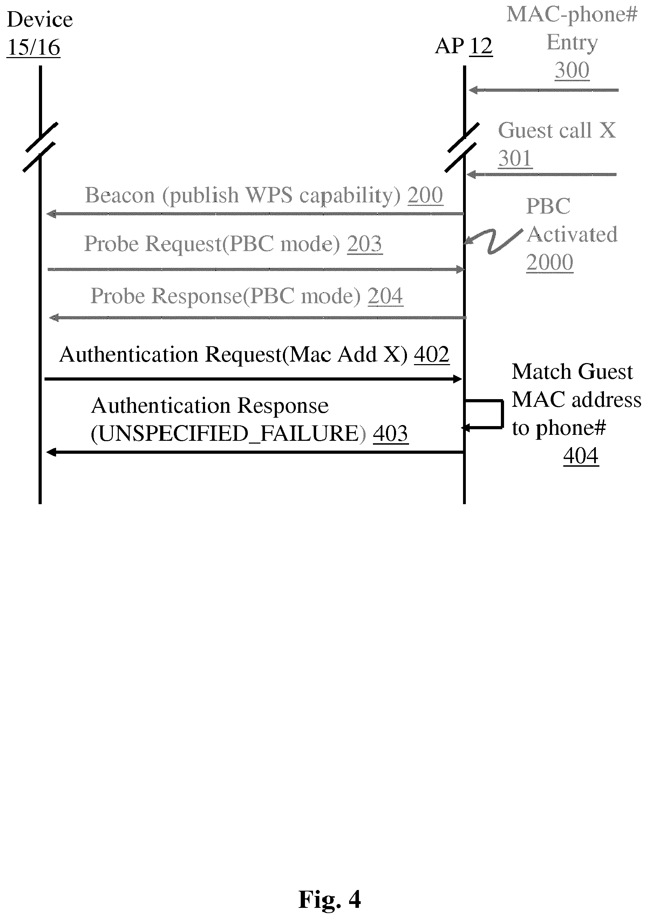

**Figure 4** is a sequence diagram of the first embodiment of the method when the Guest device **15/16** MAC address provided in authentication request **402** is not a MAC address that is associated with the telephone number of the call / SMS received in step **301** (e.g., unknown MAC address, or telephone number of caller is not that of a telephone number associated with the known MAC address). In such case, there will be no match (correspondence) between the MAC address provided in authentication request **402** and the telephone number of the caller obtained from call/SMS **301.** Verification **404** will therefore fail, and AP **12** will transmit an authentication failure message **403** to Guest device **15/16** and steps **206-209** will not take place, making the data exchange **210** between Guest **15/16** and AP **12** impossible.

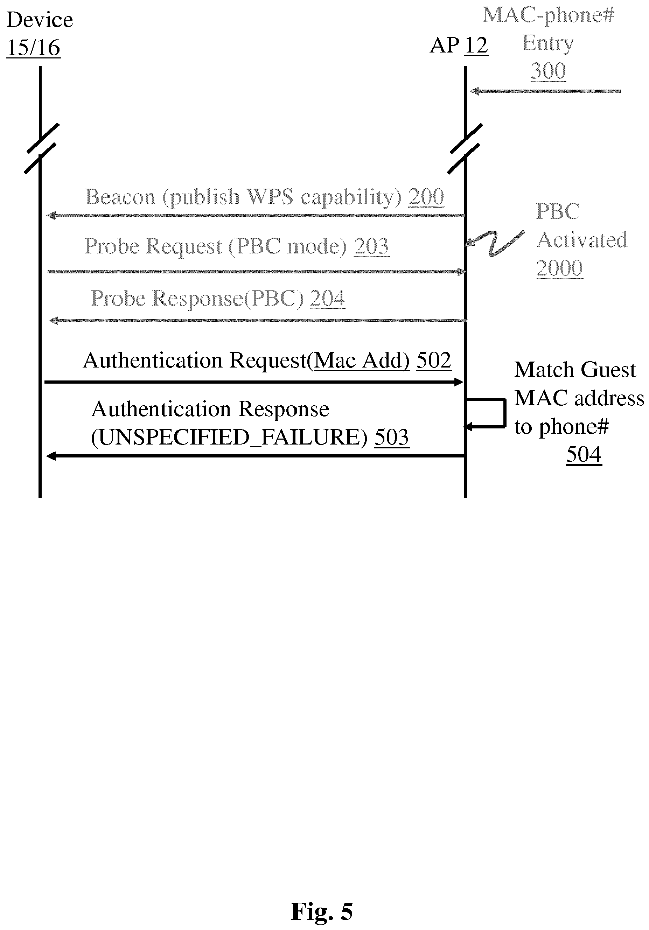

**Figure 5** is a sequence diagram of the first embodiment of the method when no call/SMS was received. While an authentication request **502** is received from Guest **15/16,** verification **504** will fail because no call/SMS was received and authentication failure message **503** will be transmitted to the Guest device **15/16.**

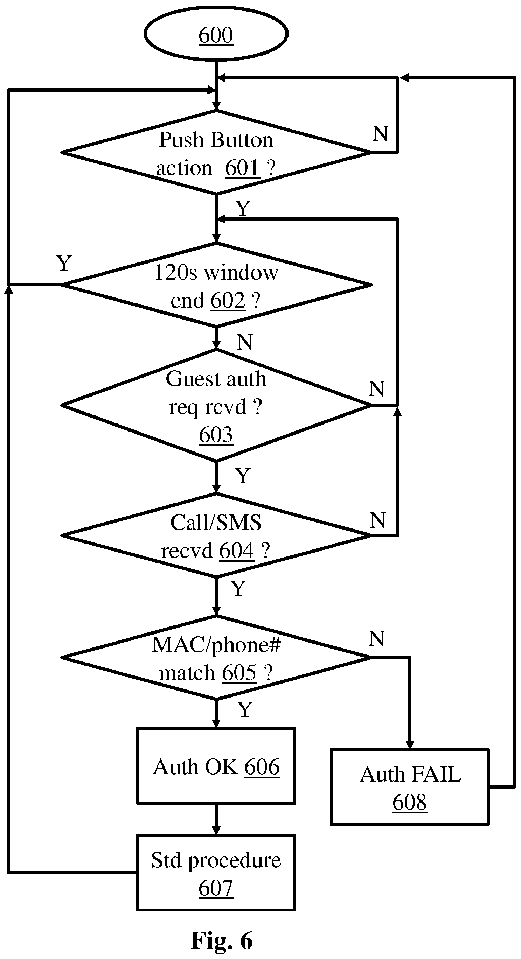

**Figure 6** is a flow chart **600** related to the first embodiment of the method of accessing a wireless communication network per the principles of the present disclosure. The method is for example implemented by AP **12.** In a first step **601,** it is verified if the PBC protocol is triggered (for example, by a user pressing a PBC push button on AP **12).** If the PBC is triggered, the 120s Monitor Time window is started in step **602.** Step **601** is reengaged if the Monitor Time window comes to expire. If the Monitor Time window is not expired, it is verified in step **603** if an authentication request **302** is received. If no such request is received, step **602** is reengaged in which it is verified if the 120s Monitor Time window (time window with a predefined duration) has expired. If an authentication request **302** is received, it is verified in step **604** if a call/SMS has been received. If no call/SMS has been received, step **602** is reengaged. If a call/SMS has been received, the MAC address included in the received authentication request and the telephone number of the caller is matched to a set of known MAC addresses with associated (corresponding) telephone numbers in step **605.** For this verification, AP **12** may retrieve data from a local storage (e.g., in a local memory or database in AP **12),** or from a remote storage (e.g., in the cloud, at the remote ISP, ...). If no match (correspondence) is found, an authentication failure reply is transmitted to the sender of the authentication request in step **608** and step **601** is reengaged. If however, there is a match, an authentication reply message indicating authentication success is sent to the sender of the authentication request in step **606** and the standard WPS procedure is performed in step **607,** i.e. exchanges **206-209,** and data exchanges between the transmitter of the authentication request **302** and the AP **12** can take place while step **601** is reengaged. Note that while figure 6 illustrates the general principles of the method, some of the steps of the method may be executed in a different order or in parallel.

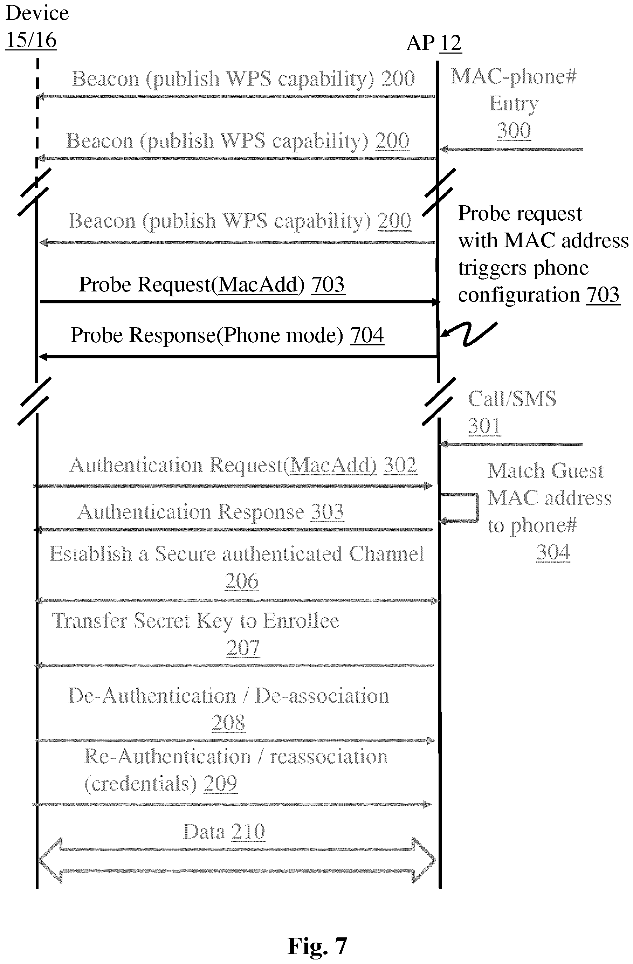

**Figure 7** is a sequence diagram of a second embodiment of the method, without triggering via PBC. AP **12** sends out beacon messages **200.** MAC - phone number is entered (reference **300)** somewhere before or during this period. In the example of figure 7, a guest device **15** or **16** comes within range of AP's **12** wireless network and receives a beacon message **200.** The guest device replies with a probe request message **703** that contains its MAC address. The receipt of a probe request message containing a MAC address triggers in AP **12** a 'phone mode' that is different from the previously discussed 'PBC mode'. Therefore, AP **12** replies to the probe request message **703** with a probe response message **704** in which it confirms to the guest device that it is in phone mode. Such indication can be done for example by defining a configMethod field of the ProbeResponse massage having a value of 0x0101 (which corresponds to setting bit 9 in the WPS config word). Next, a phone call or SMS is expected to be received **301** and authentication (steps **302-303)** and further steps **206-209** are performed as previously discussed and data exchange between guest device **15/16** and AP **12** can take place, or failure is reported to the guest device as explained with the aid of figures 4 and 5.

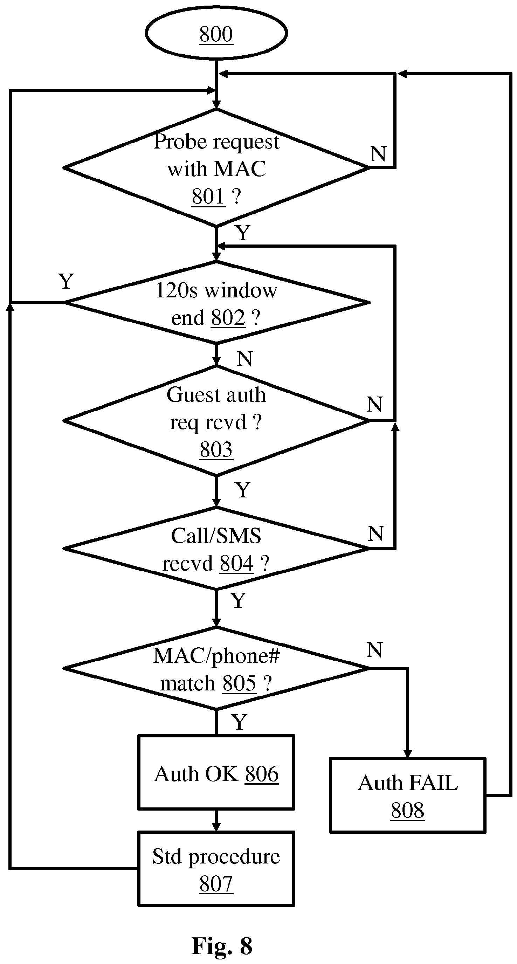

**Figure 8** is a flow chart **800** of the second embodiment of the method. In step **801,** it is verified if a probe request containing a MAC address is received. If such probe request is received, a 120s Monitor Time window is started and step **802** is engaged. Steps **802** - **807** perform the same function as respective steps **602** - **607** of figure 6 and are not further explained here.

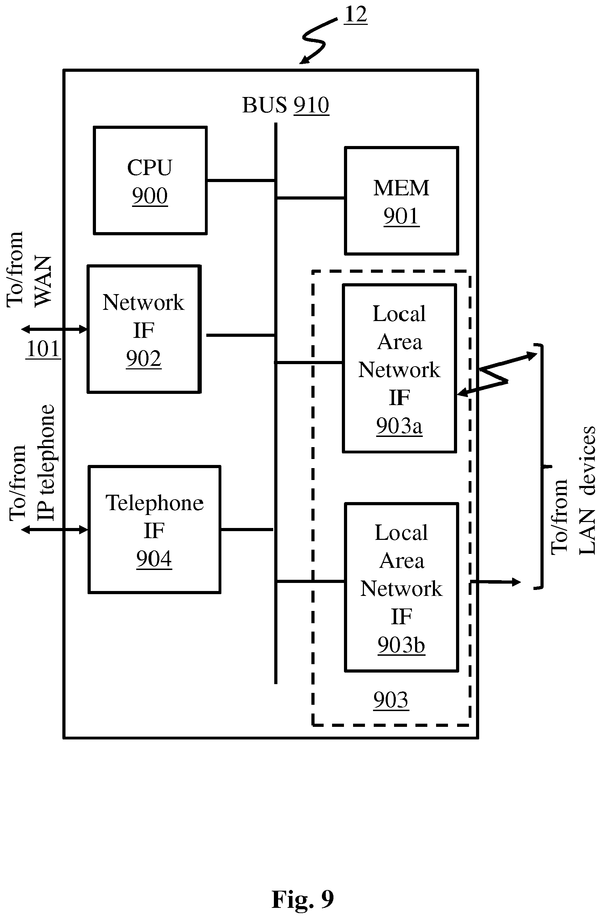

**Figure 9** is an embodiment of an access point **12** suitable for implementing the method per the principles of the present disclosure. The device **12** includes an internal communication bus **910,** a processor or central processor or processing unit (CPU) **900,** a memory **901,** a network interface **902** for connection of the access point to the WAN via communication link **101,** and a network interface **903** for connection to LAN devices **13-16.** Network interface **903** is split into two network interfaces **903a** and **903b,** for respectively wireless communication and wired communication with LAN devices **13-16** e.g., network interface **903a** for wireless Wi-Fi connections with devices **15** and **16** and network interface **903b** for wired Ethernet connection with devices **13** and **14.** The access point 12 further includes an IP telephone interface **904** for connecting (attaching) an IP telephone (e.g., device **14)** to the access point. The wireless network interface **903a** is configured to provide a WLAN and the wireless network interface is further configured to receive an authentication request for authenticating a device to access the wireless local area network, the authentication request including a Media Access Control address of the device. The telephone interface **904** is configured to receive at least one of an incoming call or short message service from a caller destined to an Internet Protocol telephone connected to said telephone interface. The wireless network interface **903a** is further configured to send to the device an authentication response indicating authentication success when there exists a Media Access Control address - associated telephone number correspondence for the Media Access Control address of the device and a telephone number of the caller, and the wireless network interface **903a** is further configured to send to said device an authentication response indicating an authentication failure when said correspondence does not exist.

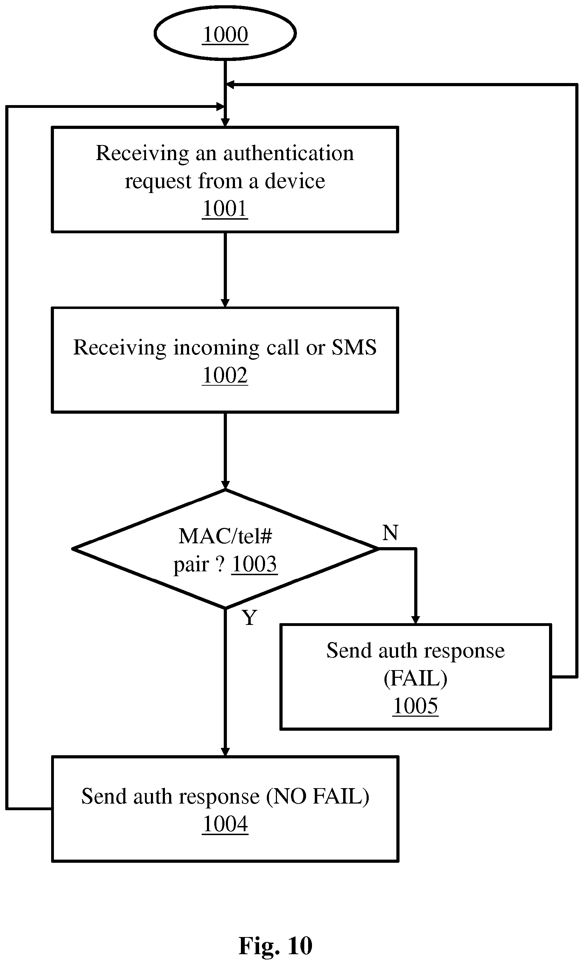

**Figure 10** is a generic flow chart of a method **1000** of authenticating access to a wireless communication network of an access point according to the present principles. In a first step **1001,** the access point receives an authentication request for authenticating a device to access the wireless communication network. The authentication request comprises a Media Access Control address of the device. The access point is for example AP **12,** the authentication request is a request **302,** the device is for example device **15** or **16.** In a second step **1002,** the access point receives an incoming call or a short message service from a caller, the call or SMS being destined to an Internet Protocol telephone connected to the access point. The caller is for example a guest having device **15** or **16.** The IP telephone is for example DECT set **14.** In step **1003,** it is verified if there exists a MAC address - telephone number correspondence (match) for the MAC address of the device and the telephone number of the caller. This verification is for example match test **304, 404,** or **504.** The MAC address of the device is found in the authentication request. The telephone number of the caller is obtained by the access point when the caller calls the access point's attached IP telephone. MAC addresses and associated (corresponding) telephone number(s) are retrieved from a memory accessible by the access point, for example from a local memory or database in the access point, or from a memory or database accessible by the access point through the access point's ISP. For any one MAC address, one or several phone numbers may be present in the memory and 'correspond' to the MAC address. Alternatively, the access point may access a secured service for verification of a correspondence between the MAC address in the authentication request and the telephone number of the caller, the secured service simply replying with a success or a failure indication. For example, the access point may compute a hash over the MAC address appended with the caller's telephone number, and transmit the hash to its ISP for verification. In step **1004,** the access point sends an authentication response to the device indicating authentication success when there exists a Media Access Control address - telephone number correspondence for the Media Access Control address of the device and the telephone number of the caller. The authentication response is for example authentication response **303.** In step **1005,** an authentication response is sent to the device indicating an authentication failure otherwise, i.e. when there does not exists a correspondence, for example, the MAC address of the device is unknown, or the MAC address is known but the caller's telephone number does not correspond to the telephone number(s) associated with the MAC address. The authentication response sent in step **1005** is for example response **403** or **503.**

It is to be appreciated that some elements in the drawings may not be used or be necessary in all embodiments. Some operations may be executed in parallel. Embodiments other than those illustrated and/or described are possible. For example, a device implementing the present principles may include a mix of hard- and software.

It is to be appreciated that aspects of the principles of the present disclosure can be embodied as a system, method or computer readable medium. Accordingly, aspects of the principles of the present disclosure can take the form of an entirely hardware embodiment, an entirely software embodiment (including firmware, resident software, micro-code and so forth), or an embodiment combining hardware and software aspects that can all generally be defined to herein as a "circuit", "module" or "system". Furthermore, aspects of the principles of the present disclosure can take the form of a computer readable storage medium. Any combination of one or more computer readable storage medium(s) can be utilized.

Thus, for example, it is to be appreciated that the diagrams presented herein represent conceptual views of illustrative system components and/or circuitry embodying the principles of the present disclosure. Similarly, it is to be appreciated that any flow charts, flow diagrams, state transition diagrams, pseudo code, and the like represent various processes which may be substantially represented in computer readable storage media and so executed by a computer or processor, whether such computer or processor is explicitly shown.

A computer readable storage medium can take the form of a computer readable program product embodied in one or more computer readable medium(s) and having computer readable program code embodied thereon that is executable by a computer. A computer readable storage medium as used herein is considered a non-transitory storage medium given the inherent capability to store the information therein as well as the inherent capability to provide retrieval of the information there from. A computer readable storage medium can be, for example, but is not limited to, an electronic, magnetic, optical, electromagnetic, infrared, or semiconductor system, apparatus, or device, or any suitable combination of the foregoing. Some or all aspects of the storage medium may be remotely located (e.g., in the 'cloud'). It is to be appreciated that the following, while providing more specific examples of computer readable storage mediums to which the present principles can be applied, is merely an illustrative and not exhaustive listing, as is readily appreciated by one of ordinary skill in the art: a hard disk, a read-only memory (ROM), an erasable programmable read-only memory (EPROM or Flash memory), a portable compact disc read-only memory (CD-ROM), an optical storage device, a magnetic storage device, or any suitable combination of the foregoing.

## Claims

1. A method (1000) of authenticating access to a wireless communication network of an access point (12), said method comprising:
receiving (1001), by said access point, an authentication request for authenticating a device (15, 16) to access said wireless communication network, said authentication request comprising a Media Access Control address of said device;
receiving (1002), by said access point, at least one of an incoming call or short message service from a caller, destined to an Internet Protocol telephone connected to the access point;
sending, by the access point and to said device, an authentication response (1004) indicating authentication success when there exists a Media Access Control address - associated telephone number correspondence for said Media Access Control address of said device and a telephone number of said caller, and sending by said access point and to said device an authentication response (1005) indicating an authentication failure when said correspondence does not exist.

2. The method according to claim 1, wherein said method further comprises starting a time window with a predefined duration upon a trigger event, and sending an authentication failure to said device when said incoming call or short message service is not received within said predefined duration of said time window.

3. The method according to claim 1 or 2, wherein said trigger event is an entry of the access point into Wi-Fi Protected Setup - Push Button Configuration mode.

4. The method according to claim 1 or 2, wherein said trigger event is receipt by said access point of a probe request message comprising a Media Access Control address of said device.

5. The method according to any of claims 1 to 4, further comprising retrieving, from a storage location accessible by said access point, Media Access Control addresses and associated telephone numbers.

6. The method according to claim 5, wherein said storage location is in said access point.

7. The method according to claim 5, wherein said storage location is at an Internet Service Provider.

8. An access point (12), the access point comprising:
a wireless network interface (903a) configured to provide a wireless local area network;
the wireless network interface being further configured to receive an authentication request for authenticating a device (15, 16) to access said wireless local area network, said authentication request comprising a Media Access Control address of said device;
a telephone interface (904) configured to receive at least one of an incoming call or short message service from a caller destined to an Internet Protocol telephone connected to said telephone interface;
said wireless network interface being further configured to send to said device an authentication response indicating authentication success when there exists a Media Access Control address - associated telephone number correspondence for said Media Access Control address of said device and a telephone number of said caller, and further configured to send to said device an authentication response indicating an authentication failure when said correspondence does not exist.

9. The access point according to claim 8, further comprising a processor (900) configured to start a time window with a predefined duration upon a trigger event, and said wireless network interface being further configured to send an authentication failure to said device when said incoming call or short message service is not received within said predefined duration of said time window.

10. The access point according to claim 9, further comprising a memory configured for retrieving Media Access Control addresses and associated telephone numbers.

11. The access point according to claim 8 or 9, wherein the access point is a wireless router.

12. The access point according to claim 8 or 9, wherein the access point device is a gateway.

13. The access point according to claim 8 or 9, wherein said access point device is a Set Top Box.

14. The access point according to claim 8 or 9, wherein said access point device is a mobile communication device.

15. The access point according to claim 14, wherein the mobile communication device is a smart phone.
